# EUROPÄISCHE PATENTSCHRIFT

(11) **EP 2 809 826 B1**
(45) Veröffentlichungstag und Bekanntmachung des Hinweises auf die Patenterteilung: **22.06.2016**
(21) Anmeldenummer: 13719438.7
(22) Anmeldetag: 10.04.2013
(51) Int. Cl.: B23K 1/00, B23K 35/02, C23C 26/00, C23C 30/00, C23C 26/02, B23K 35/30, B23K 35/32

(54) **VERFAHREN ZUR AUFBRINGUNG EINER SCHUTZSCHICHT AUF EINE TURBINENKOMPONENTE**
METHOD FOR APPLYING A PROTECTIVE LAYER TO A TURBINE COMPONENT
PROCÉDÉ POUR APPLIQUER UNE COUCHE PROTECTRICE SUR UN ÉLÉMENT DE TURBINE

(30) Priorität: 07.05.2012 EP 12166937
(43) Veröffentlichungstag der Anmeldung: 10.12.2014
(73) Patentinhaber: Siemens Aktiengesellschaft, 80333 München (DE)
(72) Erfinder: GOLLERTHAN, Susanne, 44787 Bochum (DE); KERN, Torsten-Ulf, 46485 Wesel (DE)
(86) Internationale Anmeldenummer: PCT/EP2013/057418
(87) Internationale Veröffentlichungsnummer: WO 2013/167334

(56) Entgegenhaltungen:
- EP-A1- 1 391 537
- EP-A1- 1 498 682
- WO-A1-2009/133105
- WO-A1-2011/000348
- BE-A- 700 083
- DE-A1-102010 004 193
- US-A1- 2002 075 999

## Beschreibung

Die Erfindung betrifft ein Verfahren zur Herstellung einer Schutzschicht auf einem Grundwerkstoff, wobei auf dem Grundwerkstoff eine Nanofolie und ein Lot angeordnet wird.

Im Bereich der kommunalen Energieversorgung werden in Dampfkraftwerken und in Gas- und Dampfturbinenkraftwerken thermomechanische Maschinen eingesetzt, die hohen Temperaturen ausgesetzt sind. Dampfturbinen weisen verschiedene Turbinenkomponenten auf und sind in der Regel großvolumig ausgeführt. Im Betrieb sind die vorgenannten Turbinenkomponenten sowohl erosiven als auch korrosiven sowie einem mechanischen Verschleiß ausgesetzt. Durch diese fortwährende Belastung der Turbinenkomponenten kommt es zu Materialzerrüttungen und/oder Materialverlusten. Dadurch wird die Lebensdauer der Turbinenkomponenten deutlich verringert, was auch eine Folge auf die Betriebssicherheit der ganzen Dampfturbinenanlage hat. Die korrosiven bzw. erosiven Auswirkungen auf die Turbinenkomponenten sind beispielsweise Erosionskorrosion, Tropfenschlagerosion, Gleitverschleiß, Wälzverschleiß, Korrosion und Oxidation.

Um die Turbinenkomponenten vor den vorgenannten Verschleißmechanismen zu schützen, werden verschiedene Maßnahmen getroffen. So werden diese Turbinenkomponenten häufig mit Schichten versehen, die eine gegenüber dem Grundwerkstoff der Turbinenkomponente erhöhte Verschleißbeständigkeit und/oder Korrosionsbeständigkeit aufweisen. Es sind verschiedene Verfahren bekannt, um Schutzschichten auf einen Grundwerkstoff aufzubringen. Unter anderem sind bekannt: thermisches Spritzen, Auflöten, CVD, PVD, Galvanisieren und Auftragsschweißen.

Allerdings ist infolge der Eigenschaften der Turbinenkomponenten nicht jedes der vorgenannten Verfahren dazu geeignet, eine Schutzschicht auf eine Turbinenkomponente aufzubringen. Beispielsweise ist ein thermisches Spritzen auf Grund einer komplizierten Turbinenkomponentengeometrie eventuell nicht möglich. Des Weiteren könnte durch die teilweise sehr großen Bauteilgeometrien ein Ofenprozess ausscheiden. Weitere Verfahren können ausscheiden, wenn nicht die gesamte Turbinenkomponente, sondern nur bestimmte Stellen der Turbinenkomponente beschichtet werden sollen aus Dauerfestigkeits- oder Kostengründen. Häufig ist für die oben genannten Verfahren ein Platzbedarf nötig, der in manchen Situationen z. B. bei einer Revision nicht vorhanden ist. Somit scheiden auch verschiedene Verfahren auf Grund fehlenden nötigen Platzbedarfs aus. Schließlich könnten die vorgenannten Verfahren nicht anwendbar sein, wenn durch das Verfahren selbst eine ungünstige Beeinflussung des Grundwerkstoffs oder ein Auftreten von Verzügen z. B. durch Wärmeeintrag während des Lötens in einem Ofen auftritt. Daher werden in der Regel die Turbinenkomponenten derart mit einer Schutzschicht versehen, dass individuelle Lösungen erarbeitet werden, die zu einer optimalen Lösung, d. h. zu einer geeigneten Schicht führen. Solche Lösungen sind allerdings manchmal sehr kostenintensiv, wenn z. B. mit Maskierungen gearbeitet werden muss oder Verfahrensparameter wie z. B. die Löttemperatur beschränkt werden müssen, um die Turbinenkomponente nicht durch Veränderung des Grundwerkstoffs oder auftretende Verzüge zu beeinflussen.

WO 2009/133105 A1 und DE 10 2010 004193 A1 offenbaren Verfahren zur Herstellung einer Schutzschlicht durch die Verwendung einer Nanofolie und eines Lots.

An dieser Stelle setzt die Erfindung an. Die Erfindung hat es sich zur Aufgabe gemacht, ein Beschichtungsverfahren anzugeben, das die vorgenannten Probleme überwindet.

Gelöst wird diese Aufgabe durch ein Verfahren zu einer Herstellung einer Schutzschicht gemäß den Merkmalen des Anspruchs 1.

Demnach wird auf den Grundwerkstoff der Turbinenkomponente eine Nanofolie aufgebracht. Über diese Nanofolie wird ein Lot angeordnet. In einem nächsten Schritt wird die Nanofolie lokal entzündet, wodurch eine exotherme Reaktion entsteht, die zu einer Schmelzung des Lots auf dem Grundwerkstoff führt.

Wesentliches Merkmal der Erfindung ist demnach die Verwendung einer Nanofolie, die derart ausgewählt ist, dass diese bei einer initialen Zündung eine exotherme Reaktion zeigt. Das bedeutet, dass die Nanofolie nach einer Initialzündung eine vergleichsweise hohe Temperatur abgibt, die dazu führt, dass der Grundwerkstoff leicht angeschmelzt und das Lot vollständig geschmolzen wird. Nach Abkühlung bzw. Erstarrung des Lot- und Nanofoliengemisches entsteht eine Schutzschicht, die die Turbinenkomponente vor den vorgenannten Angriffen wie beispielsweise Erosion oder Korrosion schützt.

Die Nanofolie und das Lot können an die Stellen positioniert werden, die vor Korrosion oder Erosion geschützt werden müssen. Somit muss nicht die gesamte Turbinenkomponente mit der erfindungsgemäßen Beschichtung ausgeführt werden. Dies führt zu einer Kostenersparnis, da es wirksam vermieden wird, die gesamte Turbinenkomponente zu beschichten.

Die Nanofolie und das Lot werden übereinander angeordnet, wobei die Nanofolie lokal z. B. am Rand entzündet wird. Diese Entzündung kann durch einen Laserstrahl oder durch andere eine geeignete Energieübertragung erfolgen. Die exotherme Reaktion endet, sobald die Folie aufgebraucht ist. Die Nanofolie muss hierbei derart ausgewählt werden, dass die lokal entstehende Hitze ausreicht, um den Liquidus des Lotwerkstoffes zu überschreiten und so die Verbindung von Grundwerkstoff und Lot zu ermöglichen. Das Gemisch aus Lot und verbrauchter Nanofolie kann selbst als Schutzschicht dienen.

Vorteilhafte Weiterbildungen sind in den Unteransprüchen angegeben.

So wird in einer ersten vorteilhaften Weiterbildung auf dem Lot eine Zusatz-Schutzschicht angeordnet. Somit ist vor dem Entzünden der Nanofolie ein Dreischicht-System auf dem Grundwerkstoff angebracht, die aus Nanofolie, Lot und Zusatz-Schutzschicht besteht. Das Material der Zusatz-Schutzschicht wird dabei derart ausgewählt, dass nach der Initialzündung die auftretende Hitze ausreicht, um zum einen das Lot aufzuschmelzen und eine Verbindung zwischen dem Lot und der Zusatz-Schutzschicht als auch zwischen dem Lot und dem Grundwerkstoff herzustellen. Die Zusatz-Schutzschicht wird dabei nicht mit dem Lot und der Nanofolie zu einem neuen Gebilde durchmischt, sondern bildet eine Schutzschicht auf der Turbinenkomponente, die den Grundwerkstoff vor äußeren Einflüssen schützt.

In einer vorteilhaften Weiterbildung besteht die Zusatz-Schutzschicht aus einem keramischen Werkstoff. Bei den in Frage kommenden keramischen Systemen kommen vor allem Karbide, aber auch Boride oder ähnliches in Betracht. Beispielsweise können TiC, B₄C, TiB₂ oder ähnliche Zusammensetzungen verwendet werden. Neben keramischen Partikeln oder Schichten kommen aber auch intermetallische Phasen wie z. B. TiAl oder Hartlegierungen wie z. B. Stellit auf Kobalt-Basis in Betracht.

In einer vorteilhaften Weiterbildung wird eine Nanofolie mit folgender chemischer Zusammensetzung verwendet: Aluminium und Palladium (Al/Pd), Aluminium und Nickel (Al/Ni), Nickeloxid und Nickel und Aluminium (NiO-Ni/Al) und Kupferoxid und Kupfer und Aluminium (CuO-Cu/Al).

Die Nanofolie umfasst demnach zumindest zwei chemische Elemente, die in der Nanofolie in Schichten übereinander angeordnet sind. So wird im Falle einer Aluminium- und Nickel-Nanofolie eine Schicht Aluminium auf einer Schicht Nickel und wiederum eine Schicht Aluminium auf der Nickelschicht angeordnet und das abwechselnd übereinander aufgebaut. Diese Schichten sind im Mikrometer- bzw. im Nanometerbereich ausgebildet.

In einer vorteilhaften Weiterbildung wird ein Lot mit folgender chemischer Zusammensetzung verwendet: Ag₅₉Cu_{27,5}In_{12,5}Ti; TiCu₁₅Ni₁₅; TiZr_{37,5}Cu₁₅Ni₁₀ oder ähnliche Zusammensetzungen.

Erfindungsgemäß wird das Verfahren derart erweitert, dass die Nanofolie und das Lot derart angeordnet werden, dass nach der exothermen Reaktion die verbleibenden Nanofolien-Hartstoffe dachziegelartig oder fischschuppenartig angeordnet sind.

Nach der Initialzündung und der anschließend ablaufenden exothermen Reaktion bleibt, nachdem die exotherme Reaktion vollständig abgelaufen ist, ein Reaktionsprodukt übrig, das intermetallische Phasen aufweist. Zum Beispiel bleiben im Falle einer aus Nickel und Aluminium bestehenden Nanofolie NiAl-Hartstoffe zurück, die als plattige Hartstoffe in dem verschmolzenen Lot angeordnet sind. Erfindungsgemäß sollen die verbleibenden Nanofolien-Hartstoffe derart angeordnet sein, dass sie eine dachziegelartige oder fischschuppenartige Struktur aufweisen. Das bedeutet, dass mit Blick auf den Grundwerkstoff die Nanofolien-Hartstoffe blickdicht angeordnet sind. Das bedeutet, dass ein äußerer Einfluss auf die Oberfläche der Turbinenkomponente dazu führt, dass die Nanofolien-Hartstoffe eine wirksame Barriere gegenüber dem Grundwerkstoff bilden.

Die ist unter anderem vorteilhaft für einen bestimmten Verschleißmechanismus wie z. B. der Tropfenschlagerosion. Denn durch die spezielle Anordnung ergibt sich ein quasi sich selbst schützendes System, da die harten Nanofolien-Hartstoffe durch den Tropfenschlag nicht in der Geschwindigkeit ausgegraben werden wie globulare statistisch verteilte Partikel.

Erfindungsgemäß werden mehrere Nanofolien mit mehreren Loten übereinander vor der exothermen Reaktion angeordnet. Somit wird vorgeschlagen, die Anordnung der Nanofolien und der Lotschichten übereinander wechselartig anzuordnen. Das bedeutet, dass zunächst eine Nanofolie, dann ein Lot, dann wiederum eine Nanofolie und dann ein Lot alternierend übereinander angeordnet werden. Nach der exothermen Reaktion verbleiben die Nano-Hartstoffe übereinander angeordnet, was zu der vorgenannten dachziegelartigen oder fischschuppenartigen Struktur führt.

Ein wesentlicher Vorteil der Erfindung ist, dass die von der Nanofolie erzeugte Wärmebildung lediglich lokal entsteht und nicht die gesamte Turbinenkomponente der Hitze ausgesetzt ist. Dies vermeidet beispielsweise Verzüge der Turbinenkomponente in Folge unterschiedlicher Temperaturen.

Ein weiterer wesentlicher Vorteil der Erfindung ist, dass die Nanofolie entsprechend den zu beschichtenden Bereichen geometrisch zugeschnitten werden kann, so dass der Wärmeeintrag nur dort erfolgt, wo er zur Ausbildung der Verbindung benötigt wird. Dies führt dazu, dass lediglich lokale Bereiche mit einer erfindungsgemäßen Schutzschicht ausgebildet werden.

Des Weiteren ist es vorteilhaft, dass die Wärmeentwicklung von sehr kurzer Dauer ist. Des Weiteren können auf Passung gefertigte Beschichtungen genau positioniert werden, auf dem die jeweiligen Bauteile aufgebracht sind. Es können durch die Nanofolie Verbindungen artgleicher Werkstoffe hergestellt werden, was zu einer Kostenersparnis führen kann.

Des Weiteren wird kein externes Gerät wie z. B. ein Ofen benötigt, was auch dazu führt, dass ein geringerer Platzbedarf für die erfindungsgemäß ausgeführte Schutzschicht benötigt wird und somit auch im Service gut einsetzbar ist. Die erfindungsgemäße Schicht kann vorteilhaft vor allem an unzugänglichen Stellen angewendet werden, da lediglich eine Folie auf eine Oberfläche und schließlich ein Lot oder ein keramischer Werkstoff angebracht werden muss.

Die Erfindung wird anhand eines Ausführungsbeispiels näher erläutert.

Es zeigen:
- Figur 1: eine Querschnittansicht einer Schicht vor der exothermen Reaktion;
- Figur 2: eine Querschnittansicht einer Turbinenkomponente vor der exothermen Reaktion;
- Figur 3: eine Querschnittansicht einer Schutzschicht nach der exothermen Rekation;
- Figur 4: eine Querschnittansicht einer Turbinenkomponente vor der exothermen Reaktion.

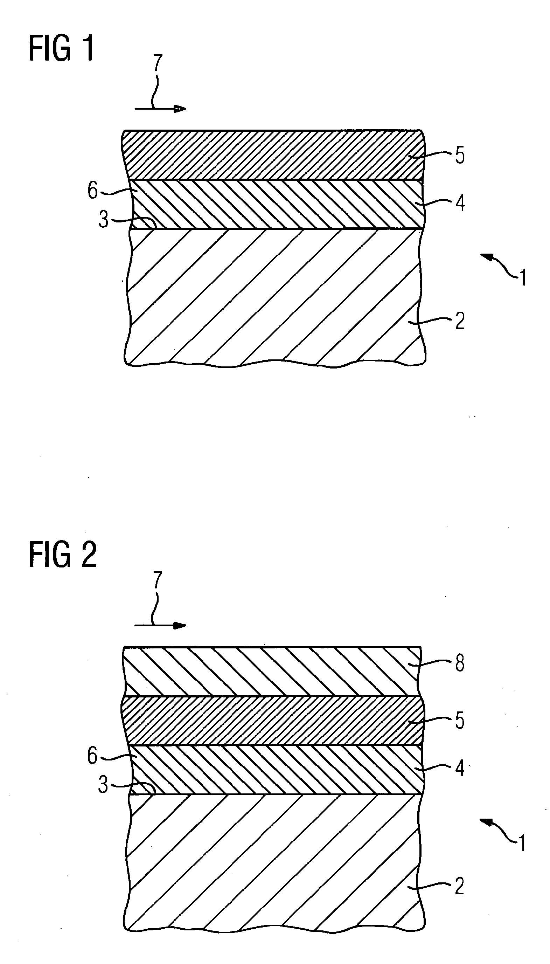

Die Figur 1 zeigt eine Turbinenkomponente 1. Diese Turbinenkomponente 1 kann beispielsweise ein Bauteil einer Dampfturbine wie z. B. ein Außengehäuse, ein Innengehäuse oder ein Rotor sein. Die Turbinenkomponente 1 umfasst einen Grundwerkstoff 2, der im Dampfturbinenbau üblicherweise ein Stahl ist. Dieser Grundwerkstoff 2 weist eine Grundwerkstoff-Oberfläche 3 auf, auf die in einem ersten Verfahrensschritt eine Nanofolie 4 angeordnet wird. Auf diese Nanofolie 4 wird ein Lot 5 angebracht. Die Nanofolie 4 ist dabei aus folgenden chemischen Elementen ausgebildet: Aluminium und Palladium (Al/Pd), Aluminium und Nickel (Al/Ni), Nickeloxid und Nickel und Aluminium (NiO-Ni/Al) und Kupferoxid und Kupfer und Aluminium (CuO-Cu/Al). Das Lot weist folgende chemische Zusammensetzung auf: Ag₅₉Cu_{27,5}In_{12,5}Ti; TiCu₁₅Ni₁₅; TiZr_{37,5}Cu₁₅Ni₁₀ oder ähnliche Zusammensetzungen.

In einem nächsten Verfahrensschritt wird die Nanofolie 4 an einer Initialstelle 6, die beispielsweise an einem Rand angeordnet sein kann, entzündet. Diese Entzündung erfolgt durch einen kurzzeitigen Wärmeeintrag durch beispielsweise einen Laserstrahl oder durch lokale Erhitzung. An dieser Stelle erhitzt sich die Nanofolie 4 derart stark, dass die Nanofolie 4 schmilzt und den Lot 5 dadurch auch zum Schmelzen bringt. Die Wärmeentstehung breitet sich dabei in eine Richtung 7 entlang der Grundwerkstoff-Oberfläche 3 aus. Nach der exothermen Reaktion der Nanofolie 4 ist das Lot 5 mit der Nanofolie 4 verschmolzen und fest mit dem Grundwerkstoff 2 verbunden.

Die Figur 2 zeigt eine Erweiterung der in Figur 1 dargestellten Anordnung zur Erzeugung einer Schutzschicht. In Figur 2 wird vor der Entzündung eine weitere Zusatz-Schutzschicht 8 auf dem Lot 5 angeordnet.

Die Erzeugung der Schutzschicht erfolgt ähnlich wie bei Figur 1 durch eine Entzündung der Nanofolie an einer Initialstelle 6 und führt dazu, dass eine Wärmeentwicklung in Richtung 7 entsteht. Was dazu führt, dass der Grundwerkstoff 2 lokal auf der Grundwerkstoff-Oberfläche 3 angeschmolzen wird und eine chemische Verbindung zwischen der Zusatz-Schutzschicht 8 über das Gemisch aus Lot 5 und Nanofolie 4 entsteht. Die Zusatz-Schutzschicht 8 kann eine keramische Schutzschicht mit folgender Zusammensetzung sein. Bei den in Frage kommenden keramischen Systemen kommen vor allem Karbide, aber auch Boride oder ähnliches in Betracht. Beispiele wären TiC, B₄C, TiB₂ oder ähnliche Zusammensetzungen. Neben keramischen Partikeln oder Schichten kommen aber auch intermetallische Phasen wie zum Beispiel TiAl oder Hartlegierungen wie z. B. Stellite auf Kobalt-Basis in Betracht.

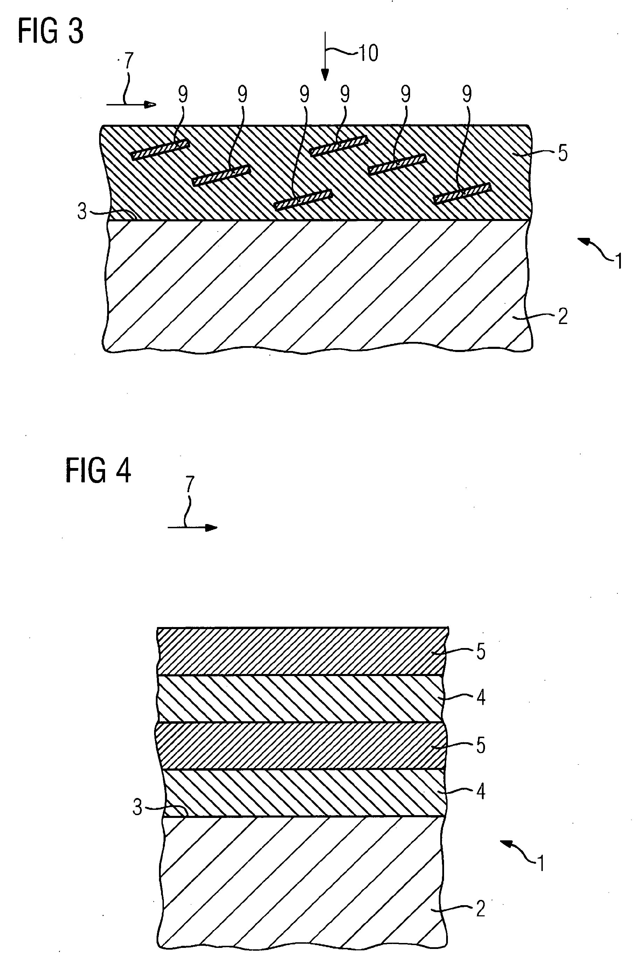

Die Figur 3 zeigt eine Anordnung des Grundwerkstoffs 2 nach der exothermen Reaktion. Nach der exothermen Reaktion verbleiben plattige Hartstoffe 9, die im verschmolzenen Lot 5 eingebettet sind. Somit dient die Nanofolie 4 im Zusammenhang mit dem Lot 5 selber als eine Schutzschicht. Hierbei kann auf eine keramische Schutzschicht verzichtet werden. Die Anordnung der plattigen Hartstoffe 9, die beispielsweise Nickel-Aluminium-Moleküle sein können, ist derart, dass sie in einer Blickrichtung 10, die orthogonal zur Grundwerkstoff-Oberfläche 3 ist, übereinander angeordnet sind. Dies würde dann einem dachziegelartigen oder fischschuppenartigen Gebilde ähneln. Das bedeutet, dass jeweils ein Ende der plattigen Hartstoffe 9 über dem anderen plattigen Hartstoff 9 angeordnet ist.

Die Figur 4 zeigt eine Anordnung der Nanofolie 4 und des Lots 5 auf dem Grundwerkstoff 2 vor der exothermen Reaktion. Der Unterschied zu der Anordnung gemäß Figur 4 gegenüber der Anordnung gemäß Figur 1 ist, dass nunmehr mehrere Schichten von Nanofolie 4 und Lot 5 verwendet werden. In der Figur 4 ist als Beispiel nur eine Schicht aus zwei Nanofolien 4 dargestellt. Es sind aber auch mehrere Schichten Nanofolien 4 möglich.

Nach der exothermen Reaktion verbleiben die plattigen Hartstoffe 9 in dem Lot 5 und können (wie in Figur 3 dargestellt) angeordnet sein.

## Patentansprüche

1. Verfahren zur Herstellung einer Schutzschicht auf einem Grundwerkstoff (2),
wobei auf dem Grundwerkstoff (2) eine Nanofolie (4) und ein Lot (5) angeordnet wird,
wobei die Nanofolie (4) lokal entzündet wird und eine exotherme Reaktion zu einer Verschmelzung des Lots (5) auf dem Grundwerkstoff (2) führt,
**dadurch gekennzeichnet, dass**
die Nanofolie (4) und das Lot (5) derart angeordnet werden, dass nach der exothermen Reaktion die verbleibenden Nanofolien-Hartstoffe (9) dachziegelartig oder fischschuppenartig angeordnet sind,
wobei mehrere Nanofolien (4) mit mehreren Loten (5) übereinander vor der exothermen Reaktion angeordnet werden.

2. Verfahren nach Anspruch 1,
wobei auf dem Lot (5) eine Zusatz-Schutzschicht (8) angeordnet wird.

3. Verfahren nach Anspruch 2,
wobei die Zusatz-Schutzschicht (8) aus einem keramischen Werkstoff besteht.

4. Verfahren nach einem der vorhergehenden Ansprüche,
wobei eine Nanofolie (4) mit der folgenden chemischen Zusammensetzung verwendet wird: Al/Ni.

5. Verfahren nach einem der vorhergehenden Ansprüche,
wobei ein Lot (5) mit folgender chemischer Zusammensetzung verwendet wird: Ag₅₉Cu_{27,5}In_{12,5}Ti; TiCu₁₅Ni₁₅ oder TiZr_{37,5}Cu₁₅Ni₁₀.

## Claims

1. Process for producing a protective layer on a base material (2),
wherein a nanofilm (4) and a brazing metal (5) are arranged on the base material (2),
wherein
the nanofilm (4) is locally ignited and an exothermic reaction leads to fusion of the brazing metal (5) on the base material (2),
**characterized in that**
the nanofilm (4) and the brazing metal (5) are arranged in such a manner that the nanofilm hard materials (9) which remain after the exothermic reaction are arranged in the manner of roof tiles or in the manner of fish scales, wherein a plurality of nanofilms (4) are arranged with a plurality of brazing metals (5) one on top of another before the exothermic reaction.

2. Process according to Claim 1,
wherein an additional protective layer (8) is arranged on the brazing metal (5).

3. Process according to Claim 2,
wherein the additional protective layer (8) consists of a ceramic material.

4. Process according to one of the preceding claims,
wherein use is made of a nanofilm (4) having the following chemical composition: Al/Ni.

5. Process according to one of the preceding claims,
wherein use is made of a brazing metal (5) having the following chemical composition: Ag₅₉Cu_{27.5}In_{12.5}Ti; TiCu₁₅Ni₁₅ or TiZr_{37.5}Cu₁₅Ni₁₀.

## Revendications

1. Procédé de production d'une couche de protection sur un matériau (2) de base,
dans lequel on met sur le matériau (2) de base une nanofeuille (4) et une brasure (5),
dans lequel on enflamme localement la nanofeuille (4) et une réaction exothermique donne une fusion de la brasure (5) sur le matériau de base,
**caractérisé en ce que**
on dispose la nanofeuille (4) et la brasure (5) de manière à ce qu'après la réaction exothermique, les substances (9) dures de la nanofeuille qui subsistent soient disposées à la manière de tuiles de toit ou d'écailles de poisson,
plusieurs nanofeuilles (4) étant superposées à plusieurs brasures (5) avant la réaction exothermique.

2. Procédé suivant la revendication 1,
dans lequel on met une couche (8) de protection supplémentaire sur la brasure (5).

3. Procédé suivant la revendication 2,
dans lequel la couche (8) de protection supplémentaire est en un matériau céramique.

4. Procédé suivant l'une des revendications précédentes,
dans lequel on utilise une nanofeuille (4) ayant la composition chimique suivante : Al/Ni.

5. Procédé suivant l'une des revendications précédentes,
dans lequel on utilise une brasure (5) ayant la composition chimique suivante : Ag₅₉Cu_{27,5}In_{12,5}Ti ; TiCu₁₅Ni₁₅ ou TiZr₃₇Cu₁₅Ni₁₀.
